# EUROPÄISCHE PATENTSCHRIFT

(11) **EP 2 710 616 B1**
(45) Veröffentlichungstag und Bekanntmachung des Hinweises auf die Patenterteilung: **16.09.2015**
(21) Anmeldenummer: 12727861.2
(22) Anmeldetag: 15.06.2012
(51) Int. Cl.: H01C 7/12

(54) **ÜBERSPANNUNGSABLEITER**
SURGE ARRESTER
PARAFOUDRE

(30) Priorität: 28.06.2011 DE 102011078210
(43) Veröffentlichungstag der Anmeldung: 26.03.2014
(73) Patentinhaber: Siemens Aktiengesellschaft, 80333 München (DE)
(72) Erfinder: PIPPERT, Erhard, 14624 Dallgow-Döberritz OT Seeburg (DE); SPRINGBORN, Dirk, 12203 Berlin (DE); GOTTSCHALK, Ingo, 10715 Berlin (DE); SULITZE, Markus, 14612 Falkensee (DE)
(86) Internationale Anmeldenummer: PCT/EP2012/061399
(87) Internationale Veröffentlichungsnummer: WO 2013/000732

(56) Entgegenhaltungen:
- WO-A1-00/55869
- WO-A1-2009/044462
- WO-A1-2012/062695
- DE-C1- 10 104 393

## Beschreibung

Die Erfindung bezieht sich auf einen Überspannungsableiter mit den Merkmalen gemäß dem Oberbegriff des Patentanspruchs 1.

Ein derartiger Überspannungsableiter ist aus der europäischen Patentschrift EP 1 977 434 B1 bekannt. Dieser Überspannungsableiter weist einen Käfig auf, in dem eine Vielzahl an Widerstandselementen übereinander gestapelt angeordnet sind. Der Käfig selbst besteht aus einem oberen Halter, einem unteren Halter und einer Mehrzahl an voneinander getrennten Isolierstangen, die jeweils mit ihrem einen Stabende von einem Durchgangsloch im oberen Halter und mit ihrem anderen Stabende von einem Durchgangsloch im unteren Halter gehalten werden.

Aus der DE 101 04 393 C1 ist ein Überspannungsableiter bekannt, bei dem eine Stützplatte aus zwei benachbarten Teilplatten gebildet ist, wobei jede der Teilplatten kulissenartige Ausnehmungen aufweist, welche sich teilweise überdecken und so Öffnungen zur Aufnahme der Isolierstangen bilden. Durch ein Verdrehen der Teilplatten gegeneinander ergeben sich so unterschiedliche Positionen der Öffnungen.

Der Erfindung liegt die Aufgabe zugrunde, einen Überspannungsableiter anzugeben, der sich einfach montieren lässt und bei den Komponenten des Überspannungsableiters relativ hohe Herstellungstoleranzen ermöglicht.

Diese Aufgabe wird erfindungsgemäß durch einen Überspannungsableiter mit den Merkmalen gemäß Patentanspruch 1 gelöst. Vorteilhafte Ausgestaltungen des erfindungsgemäßen Überspannungsableiters sind in Unteransprüchen angegeben.

Danach ist erfindungsgemäß vorgesehen, dass der obere Halter und der untere Halter derart ausgestaltet sind, dass sie für zumindest eine der Isolierstangen - relativ zu den beiden Haltern - jeweils mindestens zwei unterschiedliche Positionen ermöglichen und die zumindest eine Isolierstange relativ zu den beiden Haltern unterschiedlich positionierbar ist.

Ein wesentlicher Vorteil des erfindungsgemäßen Überspannungsableiters besteht darin, dass dieser aufgrund der erfindungsgemäßen Ausgestaltung der Halter bezüglich der Außenmaße der Widerstandselemente, die im Käfig angeordnet werden, toleranzunempfindlicher als bisherige Überspannungsableiter ist. So kann es - im Unterschied zu vorbekannten Überspannungsableitern - zu keinem Klemmen führen, wenn die Widerstandselemente geringfügig größer sind, als dies ursprünglich vorgesehen war; denn durch ein Verändern der Position der zumindest einen Isolierstange kann der Käfig ggf. vergrößert und mechanisches Spiel geschaffen werden.

Ein weiterer wesentlicher Vorteil des erfindungsgemäßen Überspannungsableiters ist darin zu sehen, dass dieser aufgrund seines flexiblen Käfigdesigns für unterschiedliche elektrische Anforderungen eingesetzt werden kann: Soll der Überspannungsableiter beispielsweise sehr hohe Kurzschlussströme führen können, so können querschnittsmäßig große Widerstandselemente verwendet werden, was durch eine geeignete Positionierung der zumindest einen Isolierstange im äußeren Bereich der beiden Halter ermöglicht wird. Sollen hingegen - beispielsweise aus Kostengründen - querschnittsmäßig kleine Widerstandselemente Anwendung finden, so kann dieser Anforderung durch eine entsprechend engere Positionierung der zumindest einen Isolierstange Rechnung getragen werden, indem die Isolierstange im inneren Bereich der Halter, also näher zur Käfigmitte hin, angeordnet wird.

In der erfindungsgemäßen Ausgestaltung des Überspannungsableiters ist vorgesehen, dass der obere Halter und der untere Halter zum Befestigen der zumindest einen variabel positionierbaren Isolierstange jeweils ein Langloch aufweisen, durch das die Stabenden der damit variabel positionierbaren Isolierstange hindurchgeführt sind. Aufgrund der vorhandenen Langlöcher in den beiden Haltern ist es möglich, die Isolierstangen innerhalb der Kontur der Langlöcher beliebig zu positionieren und somit eine stufenlose Anpassung der Position der Isolierstangen relativ zu den Widerstandselementen zu erreichen.

Um zu vermeiden, dass die Isolierstangen nach der Montage gegenüber den Widerstandselementen noch mechanisches Spiel aufweisen, ist erfindungsgemäß vorgesehen, dass zumindest ein bei der Montage verstellbares Zugband vorhanden ist, das um die variabel positionierbare Isolierstange herumgelegt ist und auf die variabel positionierbare Isolierstange eine Zugkraft in Richtung auf das mindestens eine Widerstandselement ausübt. So lässt sich bei der Montage des Käfigs durch ein Festziehen des verstellbaren Zugbandes ohne großen Aufwand erreichen, dass die Isolierstange spielfrei an den Widerstandselementen anliegt. Es ist also möglich, die Größe des Käfigs an die jeweilige Größe der Widerstandselemente spielfrei anzupassen.

Mit Blick auf eine einfache Montage des oder der Zugbänder wird es als vorteilhaft angesehen, wenn der obere Halter und/oder der untere Halter zum Befestigen der zumindest einen variabel positionierbaren Isolierstange jeweils mindestens einen Stützabschnitt aufweisen und die verstellbaren Zugbänder jeweils um einen der Stützabschnitte und die variabel positionierbare Isolierstange herumgelegt sind und - unter Abstützung an dem Stützabschnitt - auf die variabel positionierbare Isolierstange eine Zugkraft in Richtung auf das mindestens eine Widerstandselement ausüben. Ein Herumlegen des verstellbaren Zugbandes um einen Stützabschnitt und die Isolierstange ist während der Montage mit wenigen Handgriffen möglich, so dass eine einfache und kostengünstige Montage des Überspannungsableiters ermöglicht wird.

Mit Blick auf eine effektive Ausrichtung der Isolierstangen relativ zu den Widerstandselementen wird es als vorteilhaft angesehen, wenn sich die Längsrichtung der Langlöcher von der Käfigmitte radial nach außen erstreckt.

Bei dem verstellbaren Zugband handelt es sich vorzugsweise um einen Kabelbinder, da Kabelbinder im Handel sehr kostengünstig erhältlich sind.

Um einen stabilen Käfigaufbau zu erreichen, wird es als vorteilhaft angesehen, wenn zwischen dem oberen Halter und dem unteren Halter mindestens ein vorzugsweise nichtleitender Zwischenhalter vorhanden ist. Ein solcher Zwischenhalter ermöglicht es, relativ längliche Käfige, also solche, die in Längsrichtung der Widerstandselemente relativ lang sind, mit ausreichender mechanischer Stabilität herzustellen.

Bezüglich der Ausgestaltung des mindestens einen Zwischenhalters wird es als vorteilhaft angesehen, wenn der Zwischenhalter zum Befestigen der zumindest einen variabel positionierbaren Isolierstange ein Langloch aufweist, dessen Längsrichtung sich von der Käfigmitte radial nach außen erstreckt und durch das die variabel positionierbare Isolierstange hindurchgeführt ist, und wenn ein verstellbares Zugband vorhanden ist, das um die variabel positionierbare Isolierstange herumgelegt ist und auf diese eine Zugkraft in Richtung Käfigmitte ausübt.

Auch bezüglich der Ausgestaltung des oder der Zwischenhalter wird der Einsatz von Stützabschnitten als vorteilhaft angesehen; demgemäß wird vorgeschlagen, dass der Zwischenhalter zum Befestigen der zumindest einen variabel positionierbaren Isolierstange mindestens einen Stützabschnitt aufweist und das verstellbare Zugband um den Stützabschnitt und die variabel positionierbare Isolierstange herumgelegt ist.

Bevorzugt ist vorgesehen, dass der Zwischenhalter zwischen zwei Widerstandselementen angeordnet ist und in einem Durchgangsloch des Zwischenhalters ein die zwei Widerstandselemente elektrisch verbindendes Verbindungselement eingesetzt ist.

Vorzugsweise ist das Durchgangsloch kleiner als die Querschnittsfläche der zwei Widerstandselemente, und der Stützabschnitt ist vorzugsweise zwischen dem Durchgangsloch und dem Langloch angeordnet. Alternativ wird es als vorteilhaft angesehen, wenn das verstellbare Zugband um das Durchgangsloch und die variabel positionierbare Isolierstange herumgelegt ist.

Gemäß einer zweiten Ausgestaltung des Überspannungsableiters, welche zwar keine Ausführungsart des erfindungsgemäßen Überspannungsableiters ist, aber hilfreich zu dessen Verständnis ist, ist vorgesehen, dass der obere Halter und der untere Halter zum Befestigen der zumindest einen variabel positionierbaren Isolierstange jeweils ein Langloch aufweisen, durch das die Stabenden der variabel positionierbaren Isolierstange hindurchgeführt sind, wobei das Langloch zumindest eine Verjüngung aufweist, durch die das Langloch in benachbarte Lochabschnitte unterteilt wird, wobei jeder Lochabschnitt jeweils so groß ist, dass die variabel positionierbare Isolierstange durch den jeweiligen Lochabschnitt hindurchführbar ist und wobei die Verjüngung derart bemessen ist, dass die variabel positionierbare Isolierstange in dem jeweiligen Lochabschnitt gehalten und ein Verschieben von dem jeweiligen Lochabschnitt zu einem benachbarten Lochabschnitt unterbunden wird. Bei dieser Ausgestaltung gewährleisten die Verjüngungen in vorteilhafter Weise, dass die Position der Isolierstangen im oberen und unteren Halter auch ohne Zugband fest definiert ist. Beim Einführen der Isolierstangen in den oberen und unteren Halter wird durch die Wahl der relativen Position der Isolierstangen innerhalb des Langloches festgelegt, welche endgültige Größe der resultierende Käfig haben soll.

Als besonders vorteilhaft wird es angesehen, wenn das Langloch mindestens zwei Verjüngungen und somit mindestens drei benachbarte Lochabschnitte aufweist, in die die Isolierstange wahlweise eingeführt werden kann.

Gemäß einer dritten Ausgestaltung des Überspannungsableiters, welche zwar keine Ausführungsart des erfindungsgemäßen Überspannungsableiters ist, aber hilfreich zu dessen Verständnis ist, ist vorgesehen, dass der obere Halter und der untere Halter zum Befestigen der zumindest einen variabel positionierbaren Isolierstange jeweils mindestes zwei getrennt voneinander angeordnete Befestigungslöcher aufweisen, die jeweils dazu geeignet sind, ein Stabende der variabel positionierbaren Isolierstange hindurchzuführen. Bei dieser Ausgestaltung des Überspannungsableiters wird bei der Montage der Isolierstangen festgelegt, welche Größe der resultierende Käfig haben soll, indem die Isolierstangen in das jeweils geeignete Befestigungsloch im oberen und unteren Halter eingeführt werden.

Darüber hinaus wird es als vorteilhaft angesehen, wenn zumindest der obere Halter und der untere Halter an ihrer Außenkontur jeweils ein Haltemittel, insbesondere in Form einer Befestigungsrinne, aufweisen, die ein Anbringen eines mechanisch dämpfend wirkenden, insbesondere eines elastischen, Ringes (z. B. Rundschnurringes) ermöglicht. Ein an der Außenkontur des oberen und unteren Halters angebrachter mechanisch dämpfend wirkender Ring ermöglicht in vorteilhafter Weise eine flexible Lagerung und einen sicheren Transport des Überspannungsableiters, beispielsweise von der Fabrik zum endgültigen Einsatzort. So kann der Überspannungsableiter beispielsweise in liegender Form transportiert werden, indem der obere und untere Halter mit dem darauf befindlichen Ring auf eine zumindest im Wesentlichen horizontale Transportfläche aufgelegt werden. Durch die Eigenschaft des Ringes, mechanisch dämpfend zu wirken, können während des Transports Schwingungen sowie Stöße, beispielsweise im Falle von Bodenwellen auf dem Transportweg, mechanisch abgefangen werden, ohne dass es zu einer zu hohen mechanischen Belastung oder gar Zerstörung des Überspannungsableiters kommen kann.

Die Erfindung wird nachfolgend anhand dreier Ausführungsbeispiele näher erläutert, wobei sich lediglich das erste Ausführungsbeispiel der Figuren 1-9 auf den erfindungsgemäßen überspannungsableiter bezieht. Das zweite Ausführungsbeispiel der Figuren 10-16 und das dritte Ausführungsbeispiel der Figur 17 sind keine Ausführungsbeispiele der Erfindung, aber nützlich zu deren Verständnis; dabei zeigen beispielhaft:

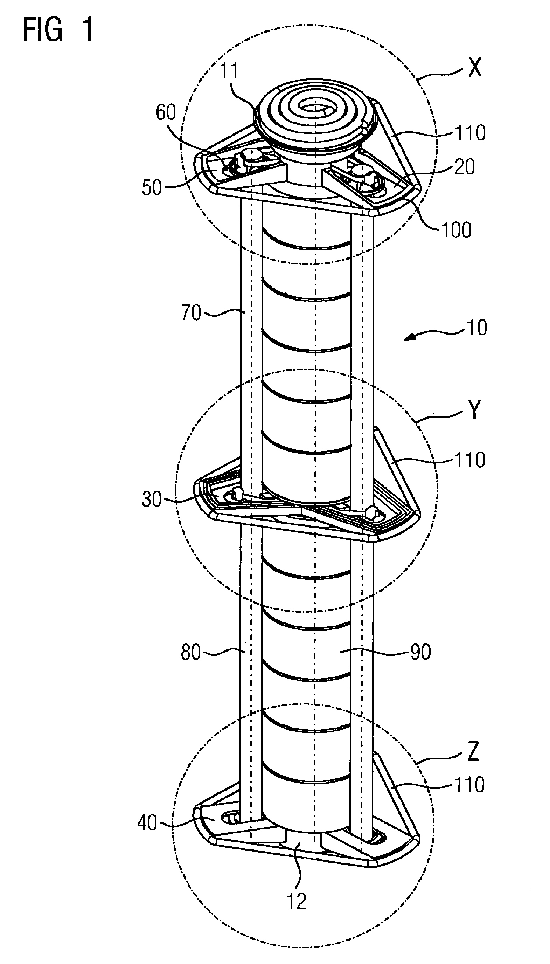

Figur 1 ein erstes Ausführungsbeispiel für einen erfindungsgemäßen Überspannungsableiter mit drei Isolierstangen, die jeweils in Langlöchern gehalten werden,

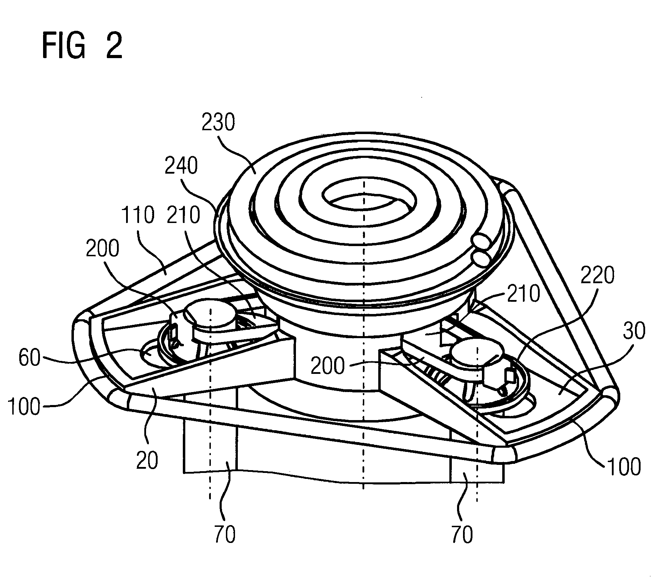

Figur 2 ein Ausführungsbeispiel für einen oberen Halter eines Käfigs des Überspannungsableiters gemäß Figur 1 näher im Detail,

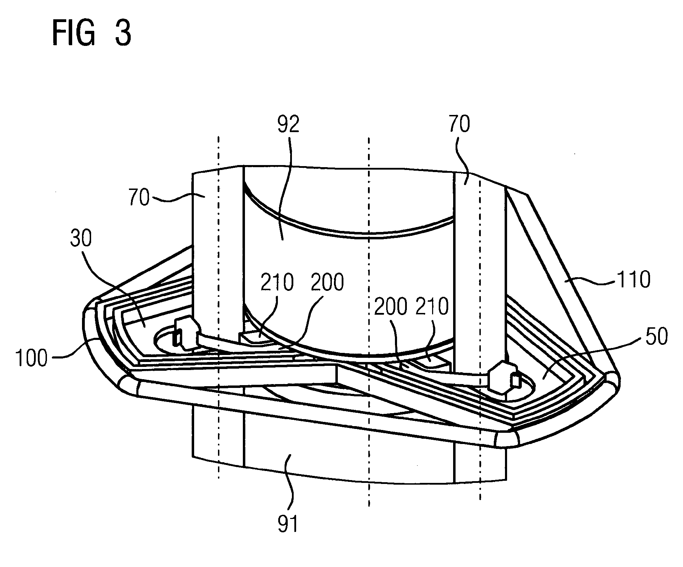

Figur 3 ein Ausführungsbeispiel für einen nichtleitenden Zwischenhalter des Käfigs des Überspannungsableiters gemäß Figur 1 näher im Detail,

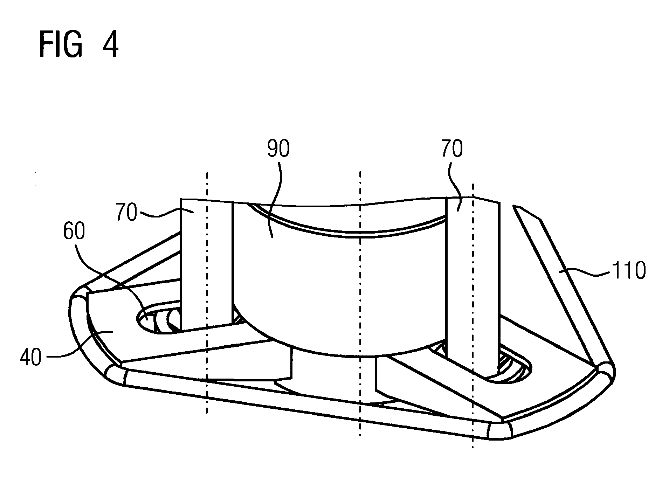

Figur 4 ein Ausführungsbeispiel für einen unteren Halter des Käfigs des Überspannungsableiters gemäß Figur 1 näher im Detail,

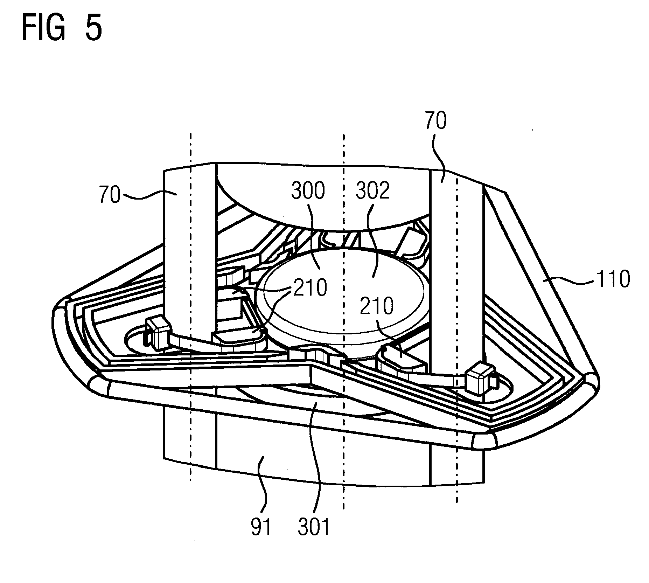

Figur 5 den Zwischenhalter gemäß Figur 3, nachdem ein oberhalb des Zwischenhalters befindliches Widerstandselement entfernt worden ist,

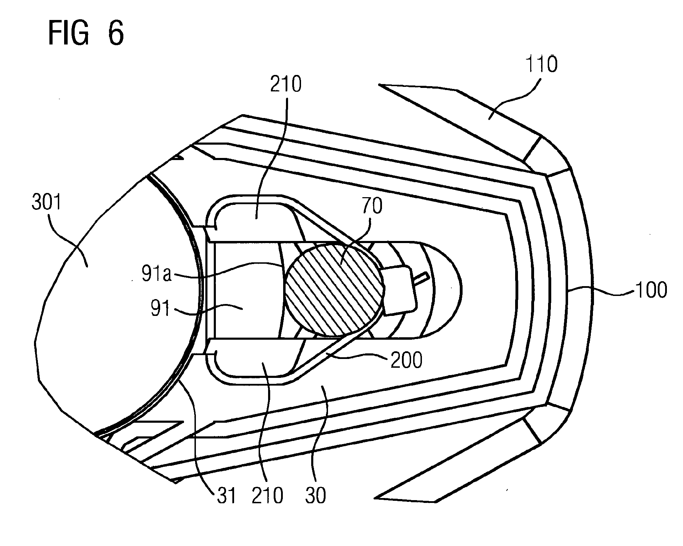

Figur 6 eine Draufsicht auf den Zwischenhalter gemäß Figur 5 näher im Detail,

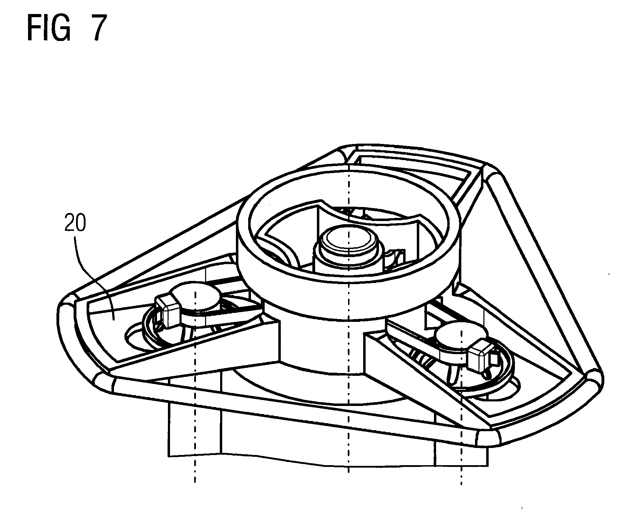

Figur 7 den oberen Halter gemäß Figur 2 im Detail ohne Kegelfeder und Federbecher,

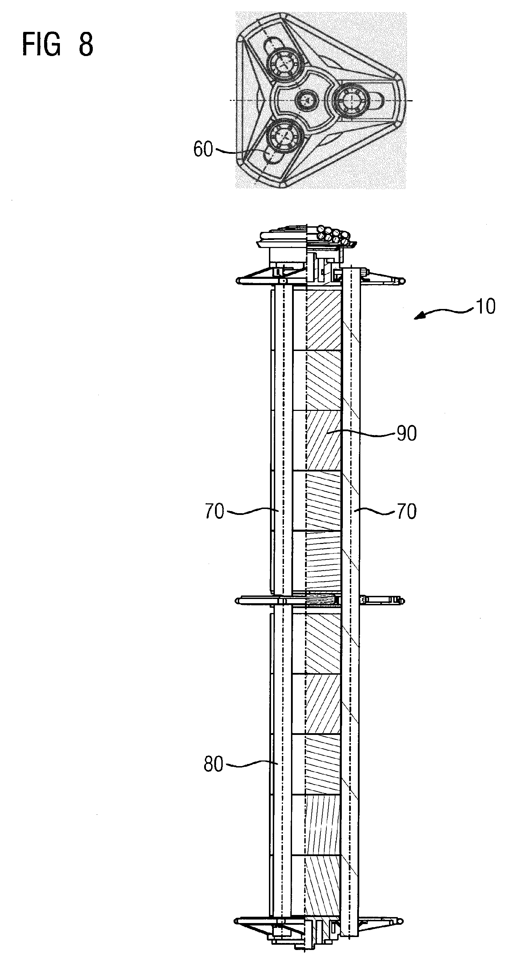

Figur 8 den fertig montierten Überspannungsableiter gemäß Figur 1 mit einer Positionierung der Isolierstangen bei querschnittsmäßig kleinen Widerstandselementen,

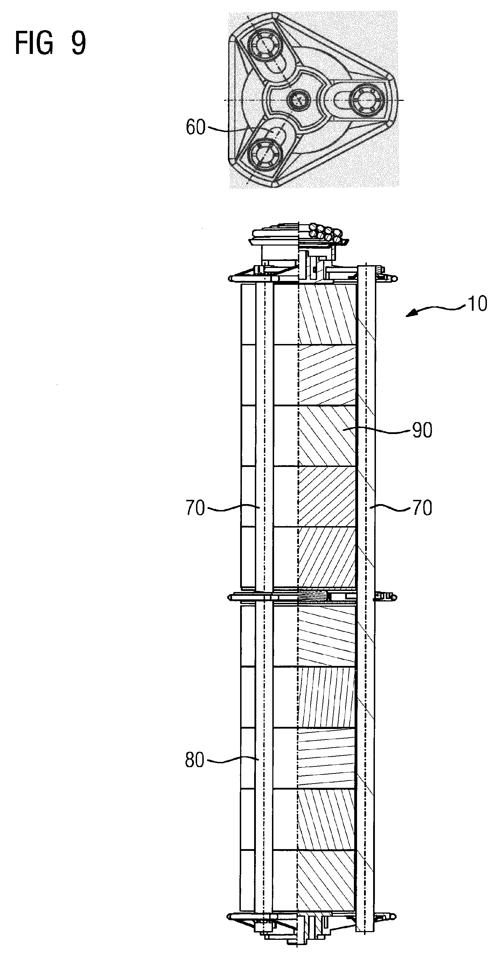

Figur 9 den Überspannungsableiter gemäß Figur 1 mit einer Positionierung der Isolierstangen bei querschnittsmäßig großen Widerstandselementen,

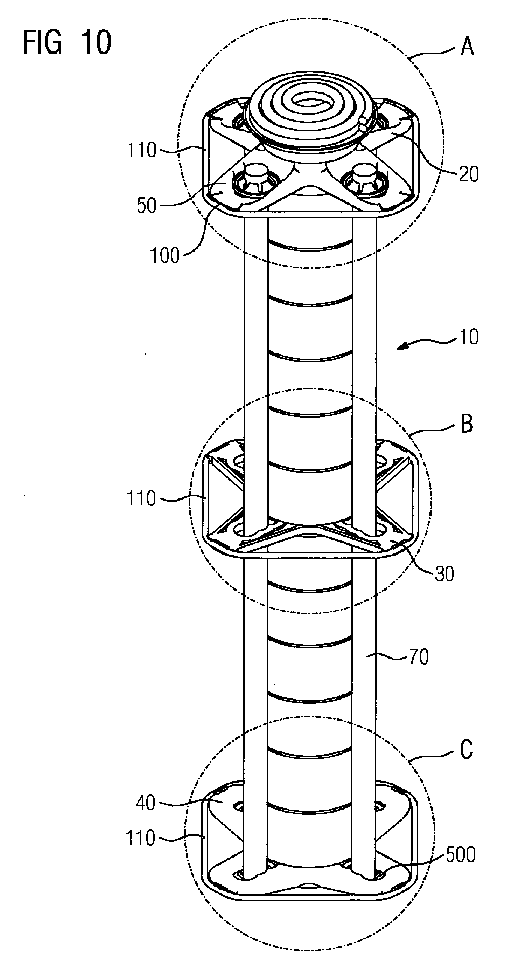

Figur 10 ein zweites Ausführungsbeispiel für einen Überspannungsableiter mit vier Isolierstangen sowie Langlöchern, die Verjüngungen aufweisen,

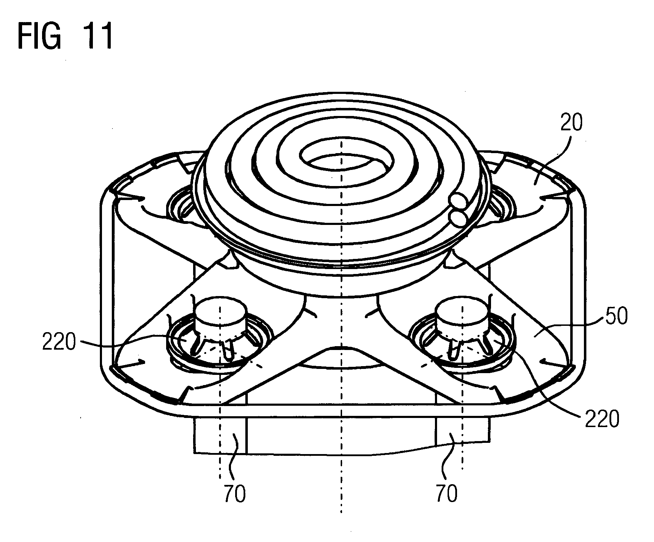

Figur 11 einen oberen Halter des Käfigs des Überspannungsableiters gemäß Figur 10,

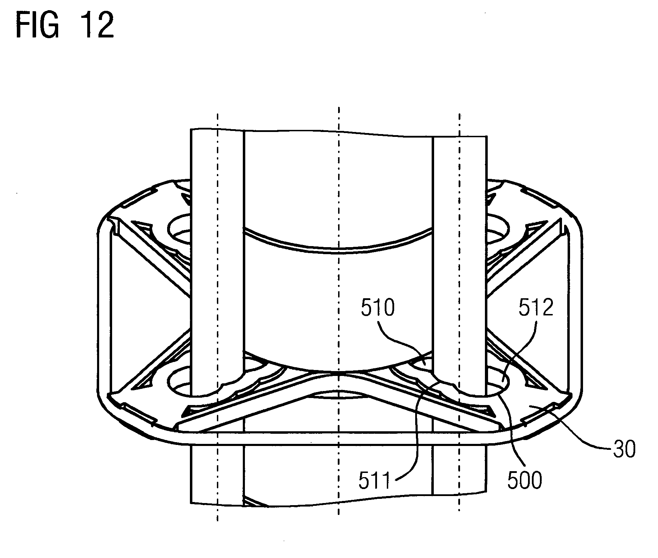

Figur 12 einen nichtleitenden Zwischenhalter des Überspannungsableiters gemäß Figur 10,

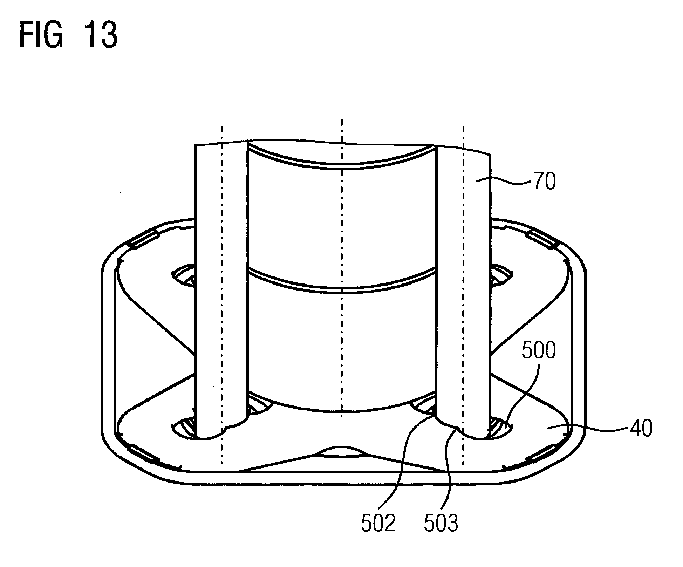

Figur 13 einen unteren Halter des Käfigs des Überspannungsableiters gemäß Figur 10,

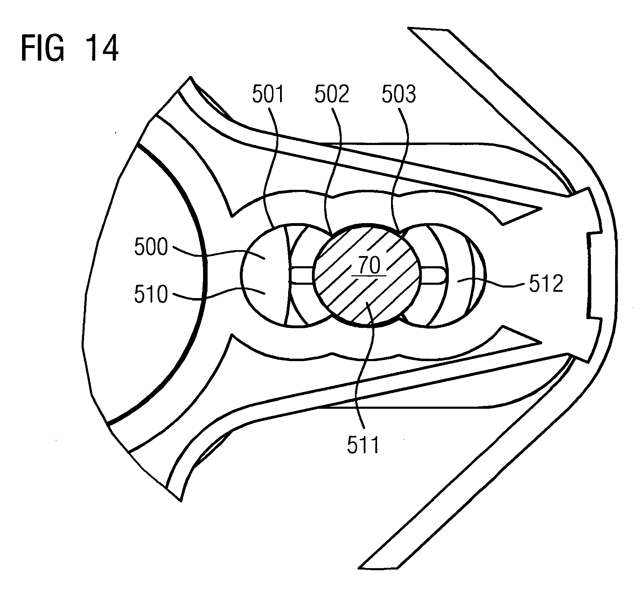

Figur 14 die Ausgestaltung der Langlöcher mit Verjüngungen für den Überspannungsableiter gemäß Figur 10 näher im Detail,

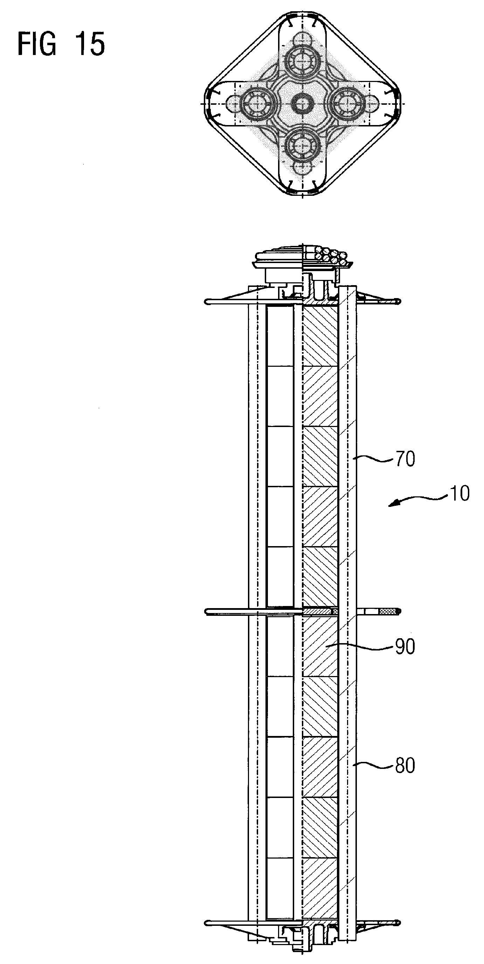

Figur 15 den Überspannungsableiter bei einer Positionierung der Isolierstangen im Falle querschnittsmäßig kleiner Widerstandselemente,

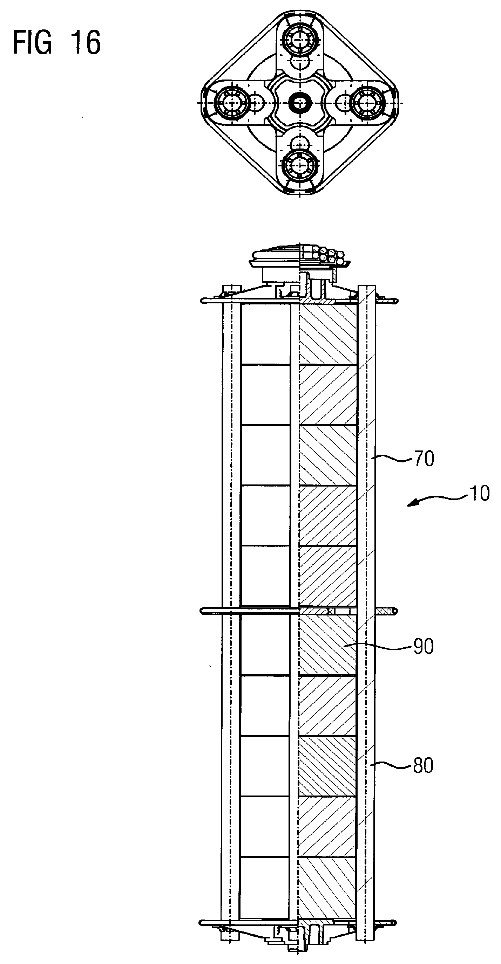

Figur 16 den Überspannungsableiter gemäß Figur 10 bei einer Positionierung der Isolierstangen im Falle querschnittsmäßig großer Widerstandselemente und

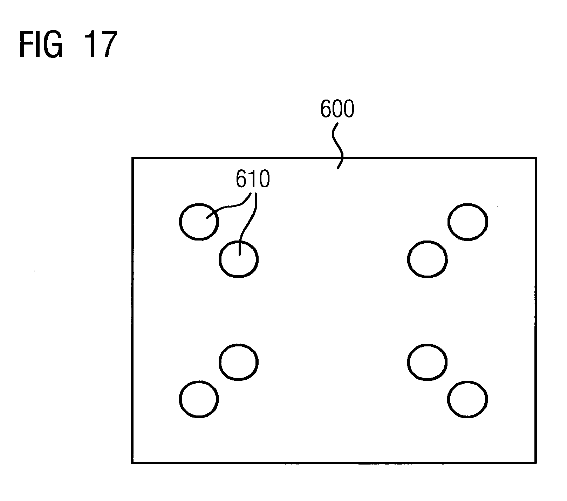

Figur 17 ein drittes Ausführungsbeispiel für einen Halter zum variablen Befestigen einer Isolierstange.

In den Figuren werden der Übersicht halber für identische oder vergleichbare Elemente stets dieselben Bezugszeichen verwendet.

In der Figur 1 erkennt man ein erstes Ausführungsbeispiel für einen Überspannungsableiter 10. Der Überspannungsableiter 10 weist einen oberen Halter 20, einen Zwischenhalter 30 sowie einen unteren Halter 40 auf. Der obere Halter 20, der Zwischenhalter 30 sowie der untere Halter 40 umfassen jeweils drei sich radial nach außen erstreckende Halteabschnitte 50, die jeweils mit einem Langloch 60 ausgestattet sind. Die Längsrichtung der Langlöcher 60 ist derart gewählt, dass sich die Langlöcher jeweils radial von der Käfigmitte nach außen erstrecken.

Die drei Halter 20, 30 und 40 halten jeweils drei Isolierstangen 70, von denen in der Figur 1 nur zwei sichtbar sind. Die Halter 20, 30 und 40 mit den Isolierstangen 70 bilden einen Käfig 80 des Überspannungsableiters 10, in dem eine Vielzahl an Widerstandselementen 90 angeordnet sind. Bei den Widerstandselementen 90 kann es sich beispielsweise um Varistoren handeln. Die Funktion der Widerstandselemente 90 besteht darin, zwischen dem oberen Ende 11 des Überspannungsableiters 10 und dem unteren Ende 12 des Überspannungsableiters 10 einen hohen elektrischen Widerstand bereitzustellen, solange die außen anliegende elektrische Spannung einen vorgegebenen Schwellenwert unterschreitet. Überschreitet die außen anliegende elektrische Spannung diesen Schwellenwert, so verändert sich der elektrische Widerstand der Widerstandselemente 90 derart, dass diese niederohmig werden und einen elektrischen Kurzschluss zwischen den beiden Enden 11 und 12 hervorrufen. Dies führt zu einem Stromfluss durch die Widerstandselemente 90, so dass von dem Überspannungsableiter 10 eine Überspannung abgeleitet wird und nachgeordnete elektrische Komponenten, die mit dem Überspannungsableiter 10 elektrisch in Verbindung stehen, vor Überspannung geschützt werden.

In der Figur 1 erkennt man darüber hinaus, dass die Halteabschnitte 50 der drei Halter 20, 30 und 40 jeweils mit einem Haltemittel in Form einer Befestigungsrinne 100 ausgestaltet sind, die jeweils einen elastischen Ring 110, beispielsweise in Form eines Rundschnurringes, tragen. Die Funktion des Ringes 110 besteht darin, einen mechanischen Schutz des Überspannungsableiters 10 während des Transportes zu gewährleisten. So lässt sich der Überspannungsableiter 10 nicht nur in aufrechter Position transportieren, wie sie in der Figur 1 gezeigt ist, sondern auch in horizontaler Position. Dabei liegt der Überspannungsableiter 10 auf den drei Ringen 110 auf und wird aufgrund der elastischen und dämpfend wirkenden Eigenschaften der drei Ringe 110 mechanisch geschützt. Dies ermöglicht es beispielsweise, den Überspannungsableiter 10 in horizontaler Ausrichtung zu transportieren, da mechanische Erschütterungen, wie sie beispielsweise durch Bodenwellen auf dem Transportweg hervorgerufen werden können, gedämpft werden.

Bei dem Ausführungsbeispiel gemäß Figur 1 sind die drei Halter 20, 30 und 40 jeweils - wie bereits angesprochen - mit drei radial nach außen ausgerichteten Halteabschnitten 50 versehen und tragen somit jeweils drei Isolierstangen 70. Alternativ ist es möglich, die drei Halter 20, 30 und 40 mit mehr Langlöchern 60 auszustatten, damit mehr als drei Isolierstangen 70 gehalten und der Käfig 80 mit mehr als drei Isolierstangen 70 ausgestattet werden kann.

Die Figur 2 zeigt die in der Figur 1 mit dem Bezugszeichen X markierte Einzelheit näher im Detail. Man erkennt den oberen Halter 20 mit den sich radial nach außen erstreckenden Halteabschnitten 50 sowie die außen an den Halteabschnitten 50 angebrachte Befestigungsrinne 100, die den mechanisch dämpfend wirkenden und elastischen Ring 110 tragen.

Darüber hinaus lässt sich die Form der Langlöcher 60 besser erkennen, die radial nach außen gerichtet sind. Die Isolierstangen 70 können innerhalb der Kontur des jeweiligen Langloches 60 verschoben werden und somit in radialer Richtung relativ zu den Widerstandselementen 90 verschoben werden. Um ein mechanisches Spiel zwischen den Isolierstangen 70 und den Widerstandselementen 90 zu vermeiden, sind Kabelbinder 200 vorgesehen, die jeweils um eine Isolierstange 70 sowie einen Stützabschnitt 210 des oberen Halters 20 herumgeführt sind. Werden die Kabelbinder 200 festgezogen, so bewirken sie eine Zugkraft auf die jeweils zugeordnete Isolierstange 70 in radialer Richtung, und zwar in Richtung Käfigmitte, so dass die Isolierstangen 70 auf die Widerstandselemente 90 gezogen werden. Mit anderen Worten liegen die Isolierstangen 70 nach einem Festziehen der Kabelbinder 200 fest an den Widerstandselementen 90 an.

In der Figur 2 erkennt man darüber hinaus Klemmelemente 220, die ein Herausrutschen der Isolierstangen 70 entlang der Längsachse der Isolierstangen aus dem oberen Halter 20 verhindern.

Zusammengefasst werden die Isolierstangen 70 am oberen Halter 20 also entlang der Längsrichtung der Isolierstangen 70 durch die Klemmelemente 220 gehalten, wohingegen die Positionierung innerhalb der Langlöcher 60 durch die Kabelbinder 200 erfolgt, die die jeweilige Isolierstange in Richtung Widerstandselement 90 ziehen.

In der Figur 2 ist außerdem erkennbar, dass das obere Ende des oberen Halters 20 mit einer Kegelfeder 230 und einem die Kegelfeder haltenden Federbecher 240 ausgestattet sein kann.

Die Figur 7 zeigt den oberen Halter 20 gemäß Figur 2, allerdings sind die Kegelfeder und der Federbecher ausgeblendet, so dass nur noch das Rohr für die Aufnahme von Trockenmittel erkennbar ist. Die Ausgestaltung des oberen Halters ermöglicht eine Belüftung des Rohres von unten, wodurch ein Rohr ohne zusätzliche Belüftungsöffnungen verwendet werden kann.

In der Figur 3 ist die in der Figur 1 mit dem Bezugszeichen Y gekennzeichnete Einzelheit des Überspannungsableiters 10 näher im Detail gezeigt. Man erkennt den Zwischenhalter 30 sowie zwei Isolierstangen 70 sowie den Ring 110, der einen mechanischen Schutz des Überspannungsableiters - wie bereits erläutert - bewirkt.

In der Figur 3 erkennt man darüber hinaus, dass jeder Kabelbinder 200 jeweils an einer zugeordneten Isolierstange 70 sowie an zwei Stützabschnitten 210 anliegt. Dieser Sachverhalt ist auch in der Figur 6 noch näher dargestellt, worauf später weiter unten eingegangen wird.

In der Figur 3 lässt sich darüber hinaus erkennen, dass der Zwischenhalter 30 ein unteres Widerstandselement 91 von einem darüber befindlichen Widerstandselement 92 räumlich trennt. Um dennoch eine elektrische Verbindung zwischen dem unteren Widerstandselement 91 und dem oberen Widerstandselement 92 zu gewährleisten, kann beispielsweise ein elektrisches Verbindungselement zwischen dem unteren Widerstandselement 91 und dem oberen Widerstandselement 92 angeordnet werden, wie dies beispielhaft die Figur 5 zeigt. In der Figur 5 ist der Zwischenhalter 30 dargestellt, nachdem das obere Widerstandselement 92 gemäß Figur 3 entfernt worden ist. Es lässt sich erkennen, dass auf dem unteren Widerstandselement 91 ein elektrisches Verbindungselement 300 aufliegt, dessen unterer Abschnitt 301 auf dem unteren Widerstandselement 91 aufliegt und dieses kontaktiert. Der obere Abschnitt 302 des elektrischen Verbindungselements 300 kann das obere Widerstandselement 92 gemäß Figur 3 unmittelbar kontaktieren oder alternativ mit einem elektrisch leitenden Zwischenring zusammenarbeiten.

In der Figur 5 erkennt man darüber hinaus die Arbeitsweise der Kabelbinder 200 genauer. So lässt sich erkennen, dass jeder Kabelbinder um eine Isolierstange 70 sowie um zwei Stützabschnitte 210 herumgelegt ist, um die jeweilige Isolierstange 70 in Richtung auf das Verbindungselement 300 und damit in Richtung auf das untere Widerstandselement 91 zu ziehen. Durch ein Festziehen der Kabelbinder 200 werden die Isolierstangen 70 somit fest auf die Widerstandselemente 90 gezogen.

Die Arbeitsweise der Kabelbinder 200 ist nochmals näher in der Figur 6 gezeigt. Die Figur 6 zeigt den Zwischenhalter 30 in einer Draufsicht. Es lässt sich der Kabelbinder 200 erkennen, der um die Isolierstange 70 sowie um die zwei zugeordneten Stützabschnitte 210 herumgelegt ist und somit die Isolierstange 70 an die Außenkontur 91a des unteren Widerstandselementes 91 andrückt.

Die Figur 4 zeigt die in der Figur 1 mit dem Bezugszeichen Z markierte Einzelheit des Überspannungsableiters 10 näher im Detail. Man erkennt den unteren Halter 40 sowie die in den Langlöchern 60 gehaltenen Isolierstangen 70, deren Position von in der Figur 4 nicht weiter dargestellten Kabelbindern auf der Unterseite des unteren Halters 40 festgelegt wird. Auch bei dem unteren Halter 40 werden die Isolierstangen 70 somit durch Kabelbinder an die Widerstandselemente 90 herangezogen. Die Arbeitsweise des unteren Halters 40 entspricht somit der Arbeitsweise des oberen Halters 20 sowie der Arbeitsweise des Zwischenhalters 30.

In der Figur 8 ist der Überspannungsableiter 10 gemäß Figur 1 gezeigt, wenn in dem Käfig 80 relativ kleine Widerstandselemente 90 eingesetzt werden. Um ein spielfreies Anliegen der Isolierstangen 70 zu erreichen, werden die Kabelbinder 200 so festgezogen, dass die Isolierstangen 70 in den Langlöchern 60 möglichst weit radial innen liegen. Der Käfig 80 lässt sich durch ein Nachinnenschieben der Isolierstangen 70 in den Langlöchern 60 also so einstellen, dass auch kleine Widerstandselemente 90 spielfrei gehalten werden.

Die Figur 9 zeigt die Justage der Isolierstangen 70 bei großen Widerstandselementen 90. Es lässt sich erkennen, dass die Isolierstangen 70 in den Langlöchern 60 jeweils sehr weit radial außen befindlich sind und somit einen relativ großen Käfig 80 bilden. Durch eine Anordnung der Isolierstangen 70 außen in den Langlöchern 60 können also auch große Widerstandselemente 90 eingesetzt werden.

Die Figur 10 zeigt ein zweites Ausführungsbeispiel für einen Überspannungsableiter 10. Auch dieser Überspannungsableiter weist einen oberen Halter 20, einen Zwischenhalter 30 sowie einen unteren Halter 40 auf. Im Unterschied zu dem Ausführungsbeispiel gemäß Figur 1 sind die drei Halter 20, 30 und 40 jeweils mit vier sich nach außen radial erstreckenden Halteabschnitten 50 ausgestattet, so dass insgesamt vier Isolierstangen 70 anstelle von drei Isolierstangen gehalten werden können.

Darüber hinaus lässt sich in der Figur 10 erkennen, dass die drei Halter 20, 30 und 40 jeweils mit Befestigungsrinnen 100 versehen sind, die es ermöglichen, einen mechanisch dämpfend wirkenden, elastischen Ring 110 an den Haltern zu montieren, um eine horizontale Lagerung und einen horizontalen Transport des Überspannungsableiters 10 zu ermöglichen.

In jedem Halteabschnitt 50 der drei Halter 20, 30 und 40 sind jeweils Langlöcher 500 vorgesehen, deren Innenkontur 501 (vgl. Figur 14) jeweils mit zwei Verjüngungen 502 und 503 versehen ist. Durch die beiden Verjüngungen 502 und 503 wird das Langloch - wie in der Figur 14 dargestellt - in drei benachbarte Lochabschnitte 510, 511 und 512 unterteilt. Jeder der drei Lochabschnitte 510, 511 und 512 ist jeweils so groß gewählt, dass eine Isolierstange 70 durch den jeweiligen Lochabschnitt hindurchgeführt und von diesem gehalten werden kann. Die beiden Verjüngungen 502 und 503 sind dabei außerdem derart bemessen, dass die Isolierstange 70 in dem jeweiligen Lochabschnitt 510, 511 oder 512 mechanisch gehalten wird und ein Verschieben der Isolierstange 70 von einem Lochabschnitt in einen anderen Lochabschnitt in radialer Richtung unterbunden wird. Die jeweilige Position der Isolierstangen 70 in dem Langloch 500 wird also dadurch festgelegt, dass während der Montage die jeweilige Isolierstange 70 in den gewünschten Lochabschnitt eingeführt wird, sei es der radial innen liegende Lochabschnitt 510, der mittlere Lochabschnitt 511 oder der radial außen liegende Lochabschnitt 512.

Die Figur 11 zeigt die in der Figur 10 mit dem Bezugszeichen A näher gekennzeichnete Einzelheit näher im Detail. Man erkennt den oberen Halter 20 mit den vier sich radial nach außen erstreckenden Halteabschnitten 50 sowie zwei Isolierstangen 70, die von Klemmelementen 220 in Längsrichtung (gemeint ist die Längsrichtung des Überspannungsableiters 10 bzw. die Längsrichtung der Isolierstangen 70) gehalten werden. Die Position der Isolierstangen 70 in radialer Richtung wird durch die Auswahl des jeweiligen Lochabschnitts 510, 511 oder 512 gemäß Figur 14 festgelegt.

Die Figur 12 zeigt die in der Figur 10 mit dem Bezugszeichen B markierte Einzelheit. Man erkennt den Zwischenhalter 30 mit den vier sich radial nach außen erstreckenden Halteabschnitten 50 sowie die Langlöcher 500, die aufgrund der Verjüngungen jeweils drei sich radial nach außen erstreckende Lochabschnitte 510, 511 und 512 bilden, wie dies im Zusammenhang mit der Figur 14 bereits erläutert worden ist.

Die Figur 13 zeigt die in der Figur 10 mit dem Bezugszeichen C gekennzeichnete Einzelheit näher im Detail. Man erkennt den unteren Halter 40 sowie die Langlöcher 500 mit den Verjüngungen 502 und 503, durch die die drei Lochabschnitte für die Isolierstangen gebildet werden.

In der Figur 15 ist der Überspannungsableiter 10 gemäß Figur 10 gezeigt, wenn vom Querschnitt her relativ kleine Widerstandselemente 90 in den Käfig 80 eingesetzt werden. Es lässt sich erkennen, dass in einem solchen Falle die Isolierstangen 70 möglichst in die innen liegenden Lochabschnitte 510 (vgl. Figur 14) eingesetzt werden, um einen möglichst kleinen Käfig 80 zu schaffen, in dem die Widerstandselemente 90 möglichst spielfrei gehalten werden.

Die Figur 16 zeigt den Überspannungsableiter 10 gemäß Figur 10, wenn vom Querschnitt her relativ große Widerstandselemente 90 eingesetzt werden. In diesem Fall werden die Isolierstangen 70 vorzugsweise in die radial außen liegenden Lochabschnitte 512 (vgl. Figur 14) eingesetzt, um einen möglichst großen Querschnitt des Käfigs 80 zu erreichen.

Zusammengefasst lässt sich also durch Auswahl eines geeigneten Lochabschnitts 510, 511 oder 512 (vgl. Figur 14) eine geeignete Käfiggröße für den Käfig 80 einstellen, damit der Käfig 80 die zu montierenden Widerstandselemente 90 aufnehmen kann.

Die Figur 17 zeigt beispielhaft ein drittes Ausführungsbeispiel für einen Halter 600, der einen oberen Halter, einen Zwischenhalter oder einen unteren Halter zum variablen Befestigen einer Isolierstange bilden kann. Der Halter 600 weist für jede Isolierstange jeweils mindestes zwei getrennt voneinander angeordnete Befestigungslöcher 610 auf, die jeweils dazu geeignet sind, ein Stabende der variabel positionierbaren Isolierstange hindurchzuführen und zu halten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung gemäß Anspruch 1 zu verlassen.

## Patentansprüche

1. Überspannungsableiter (10) mit
- mindestens einem Widerstandselement (90, 91, 92),
- und einem Käfig (80), in dem das mindestens eine Widerstandselement (90, 91, 92) angeordnet ist,
- wobei der Käfig (80) einen oberen Halter (20), einen unteren Halter (40) und mindestens drei Isolierstangen (70) umfasst, die jeweils mit ihrem einen Stabende von dem oberen Halter (20) und mit ihrem anderen Stabende von dem unteren Halter (40) gehalten werden, wobei
der obere Halter (20) und der untere Halter (40) derart ausgestaltet sind, dass sie für zumindest eine der Isolierstangen (70) - relativ zu den beiden Haltern - jeweils mindestens zwei unterschiedliche Positionen ermöglichen und die zumindest eine Isolierstange (70) relativ zu den beiden Haltern (20, 40) unterschiedlich positionierbar ist, und wobei der obere Halter (20) und der untere Halter (40) zum Befestigen der zumindest einen variabel positionierbaren Isolierstange (70) jeweils ein Langloch (60) aufweisen, durch das die Stabenden der variabel positionierbaren Isolierstange (70) hindurchgeführt sind,
**dadurch gekennzeichnet, dass**
- ein bei der Montage verstellbares Zugband (200) vorhanden ist, das um die variabel positionierbare Isolierstange (70) herumgelegt ist und auf die variabel positionierbare Isolierstange (70) eine Zugkraft in Richtung auf das mindestens eine Widerstandselement (90, 91, 92) ausübt.

2. Überspannungsableiter nach Anspruch 1,
**dadurch gekennzeichnet, dass**
- der obere Halter (20) und der untere Halter (40) zum Befestigen der zumindest einen variabel positionierbaren Isolierstange (70) jeweils einen Stützabschnitt (210) aufweisen und
- das verstellbare Zugband (200) um den Stützabschnitt (210) und die variabel positionierbare Isolierstange (70) herumgelegt ist und - unter Abstützung an dem Stützabschnitt (210) - auf die variabel positionierbare Isolierstange (70) eine Zugkraft in Richtung auf das mindestens eine Widerstandselement (90, 91, 92) ausübt.

3. Überspannungsableiter nach einem der Ansprüchen 1 oder 2, **dadurch gekennzeichnet, dass**
- die Längsrichtung des Langlochs (60) sich von der Käfigmitte radial nach außen erstreckt und/oder
- das verstellbare Zugband durch einen Kabelbinder (200) gebildet ist.

4. Überspannungsableiter nach einem der voranstehenden Ansprüche,
**dadurch gekennzeichnet, dass**
- zwischen dem oberen Halter (20) und dem unteren Halter (40) mindestens ein Zwischenhalter (30) vorhanden ist,
- der Zwischenhalter (30) zum Befestigen der zumindest einen variabel positionierbaren Isolierstange (70) ein Langloch (60) aufweist, dessen Längsrichtung sich von der Käfigmitte radial nach außen erstreckt und durch das die variabel positionierbare Isolierstange (70) hindurchgeführt ist, und
- ein verstellbares Zugband (200) vorhanden ist, das um die variabel positionierbare Isolierstange (70) herumgelegt ist und auf diese eine Zugkraft in Richtung Käfigmitte ausübt.

5. Überspannungsableiter nach einem der voranstehenden Ansprüche,
**dadurch gekennzeichnet, dass**
zumindest der obere Halter (20) und der untere Halter (40) an ihrer Außenkontur jeweils ein Haltemittel, insbesondere in Form einer Befestigungsrinne (100), aufweisen, die ein Anbringen eines mechanisch dämpfend wirkenden, insbesondere eines elastischen, Ringes (110) ermöglicht.

## Claims

1. Surge arrester (10) with
- at least one resistor element (90, 91, 92),
- and a cage (80) in which the at least one resistor element (90, 91, 92) is arranged,
- wherein the cage (80) comprises an upper holder (20), a lower holder (40) and at least three insulating rods (70) which are in each case held with one rod end by the upper holder (20) and with the other rod end by the lower holder (40), wherein
the upper holder (20) and the lower holder (40) are configured in such a way that they allow in each case two different positions for at least one of the insulating rods (70) relative to the two holders and the at least one insulating rod (70) can be positioned differently relative to the two holders (20, 40) and wherein the upper holder (20) and the lower holder (40) each have a slot (60), through which the rod ends of the variably positionable insulating rod (70) are passed, in order to fasten the at least one variably positionable insulating rod (70), **characterized in that**
- a tightening strap (200), which can be adjusted during mounting, is present which is passed around the variably positionable insulating rod (70) and exerts a tensile force, in the direction of the at least one resistor element (90, 91, 92), on the variably positionable insulating rod (70).

2. Surge arrester according to Claim 1, **characterized in that**
- the upper holder (20) and the lower holder (40) for fastening the at least one variably positionable insulating rod (70) each have one support section (210), and
- the adjustable tightening strap (200) is passed around the support section (210) and the variably positionable insulating rod (70) and, by being supported on the support section (210), exerts a tensile force on the variably positionable insulating rod (70), in the direction of the at least one resistor element (90, 91, 92).

3. Surge arrester according to either one of Claims 1 and 2, **characterized in that**
- the longitudinal direction of the slot (60) extends radially outward from the center of the cage and/or
- the adjustable tightening strap is formed by a cable tie (200).

4. Surge arrester according to one of the preceding claims, **characterized in that**
- at least one intermediate holder (30) is present between the upper holder (20) and the lower holder (40),
- the intermediate holder (30) for fastening the at least one variably positionable insulating rod (70) has a slot (60) with a longitudinal direction extending radially outward from the center of the cage and through which the variably positionable insulating rod (70) can be passed, and
- an adjustable tightening strap (200) is present which is passed around the variably positionable insulating rod (70) and exerts a tensile force on the latter, in the direction of the center of the cage.

5. Surge arrester according to one of the preceding claims,
**characterized in that**
at least the upper holder (20) and the lower holder (40) each have, on their outer contour, a holding means, in particular in the form of a fastening groove (100) which enables a ring (110), in particular an elastic one, which has a mechanical damping effect to be applied.

## Revendications

1. Parafoudre comprenant
- au moins un élément (90, 91, 92) de résistance,
- et une cage (80) dans laquelle le au moins un élément (90, 91, 92) de résistance est disposé,
- dans lequel la cage (80) comprend une console (20) supérieure, une console (40) inférieure et au moins trois barres (70) isolantes, qui sont maintenues respectivement par l'une de leurs extrémités par la console (20) supérieure et par leur autre extrémité par la console (40) inférieure, dans lequel
- la console (20) supérieure et la console (40) inférieure sont conformées de manière à rendre possible pour au moins l'une des barres (70) isolantes -par rapport aux deux consoles- respectivement au moins deux positions différentes et que la au moins une barre (70) isolante puisse être mise en position différemment par rapport aux deux consoles (20, 40), et dans lequel la console (20) supérieure et la console (40) inférieure ont, pour la fixation de la au moins une barre (70) isolante pouvant être mise en position de manière variable, respectivement une boutonnière (60), dans lesquelles passent les extrémités de la barre (70) isolante pouvant être mise en position de manière variable,
**caractérisée en ce que**
- il y a un collier (200) de serrage réglable au montage, qui est mis autour de la barre (70) isolante pouvant être mise en position de manière variable et qui applique à la barre (70) isolante pouvant être mise en position de manière variable une force de traction dans la direction allant vers le au moins un élément (90, 91, 92) de résitance.

2. Parafoudre suivant la revendication 1,
**caractérisée en ce que**
- la console (20) supérieure et la console (40) inférieure ont, pour la fixation de la au moins une barre (70) pouvant être mise en position de manière variable respectivement une partie (210) d'appui et
- le collier (200) de traction réglable est mis autour de la partie (210) d'appui et de la barre (70) isolante pouvant être mise en position de manière variable et en s'appuyant sur la partie (210) d'appui applique sur la barre (70) isolante pouvant mise en position de manière variable une force de traction dans la direction du au moins un élément (90, 91, 92) de résistance.

3. Parafoudre suivant l'une des revendications 1 ou 2, **caractérisée en ce que**
- la direction longitudinale de la boutonnière (60) s'étend du milieu de la cage radialement vers l'extérieur et/ou
- le collier de traction réglable forme un lien (200) par câble.

4. Parafoudre suivant l'une des revendications précédentes, **caractérisée en ce que**
- il y a au moins une console (30) intermédiaire entre la console (20) supérieure et la console (40) inférieure,
- la console (30) intermédiaire a pour la fixation de la au moins une barre isolante pouvant être mise en position de manière variable, une boutonnière (60), dont la direction longitudinale s'étend du milieu de la cage radialement vers l'extérieur, et dans laquelle passe la barre (70) isolante pouvant être mise en position de manière variable, et
- il y a un collier (200) de traction réglable, qui est mis autour de la barre (70) isolante pouvant être mise en position de manière variable et qui lui applique une force de traction dans la direction du milieu de la cage.

5. Parafoudre suivant l'une des revendications précédentes,
**caractérisée en ce que**
au moins la console (20) supérieure et la console (40) inférieure ont sur leur contour extérieur respectivement un moyen de maintien, notamment sous la forme d'une goulotte (100) de fixation, qui rend possible de mettre une bague (110) à effet d'amortissement mécaniquement, notamment élastique.
